# EUROPÄISCHE PATENTSCHRIFT

(11) **EP 4 399 128 B1**
(45) Veröffentlichungstag und Bekanntmachung des Hinweises auf die Patenterteilung: **25.02.2026**
(21) Anmeldenummer: 22754011.9
(22) Anmeldetag: 15.07.2022
(51) Int. Cl.: B60R 21/015, B60R 21/013, G08C 21/00, H04W 4/021

(54) **VERFAHREN ZUM SICHERN EINES INSASSENRAUMS EINES KRAFTFAHRZEUGS, STEUERUNGSEINRICHTUNG FÜR EIN KRAFTFAHRZEUG, KRAFTFAHRZEUG MIT EINEM INSASSENRAUM**
METHOD FOR PROTECTING A PASSENGER COMPARTMENT OF A MOTOR VEHICLE, CONTROL DEVICE FOR A MOTOR VEHICLE, MOTOR VEHICLE HAVING A PASSENGER COMPARTMENT
PROCÉDÉ DE PROTECTION D'UN HABITACLE D'UN VÉHICULE AUTOMOBILE, DISPOSITIF DE COMMANDE D'UN VÉHICULE AUTOMOBILE ET VÉHICULE AUTOMOBILE DOTÉ D'UN HABITACLE

(30) Priorität: 07.09.2021 DE 102021123129
(43) Veröffentlichungstag der Anmeldung: 17.07.2024
(73) Patentinhaber: Audi AG, 85045 Ingolstadt (DE)
(72) Erfinder: ELLERMANN, Lars, 85049 Ingolstadt (DE)
(86) Internationale Anmeldenummer: PCT/EP2022/069823
(87) Internationale Veröffentlichungsnummer: WO 2023/036500

(56) Entgegenhaltungen:
- DE-A1- 102016 223 544
- DE-B3- 102014 010 345

## Beschreibung

Die vorliegende Erfindung betrifft ein Verfahren zum Sichern eines Insassenraums eines Kraftfahrzeugs.

Insbesondere bei autonom fahrenden Kraftfahrzeugen besteht immer mehr das Bedürfnis, sich während der Fahrt mit anderen Dingen wie beispielsweise einem mobilen Smartphone, einem Laptop, einem Buch oder dergleichen zu beschäftigen. Hierbei besteht jedoch die Gefahr, das sich der jeweilige Gegenstand beim Entfalten eines Airbags des Kraftfahrzeugs im Entfaltungsweg des Airbags befindet. Dies kann zur Folge haben, dass der Gegenstand unkontrolliert durch den Insassenraum des Kraftfahrzeugs geschleudert wird.

Ein Lösungsansatz zur Überwindung dieses Problems wird in DE 10 2014 010 345 B3 vorgeschlagen. Bei diesem System ist vorgesehen, dass eine Position eines mobilen Endgeräts im Insassenraum eines Kraftfahrzeugs mittels einer Sensoreinrichtung erfasst wird, wobei anhand dieser Daten ermittelt wird, ob sich das mobile Endgerät innerhalb einer Position eines vorbestimmten, freizuhaltenden Sicherheitsbereichs befindet. Der Sicherheitsbereich kann beispielsweise der Bereich zwischen einem Airbag und einem Kraftfahrzeuginsassen sein. Sofern sich das mobile Endgerät innerhalb des Sicherheitsbereichs befindet, erfolgt beispielsweise eine Deaktivierung des mobilen Endgeräts oder die Ausgabe einer entsprechenden Warnmeldung.

Zudem kann vorgesehen sein, dass das mobile Endgerät mittels einer Rückhalteeinrichtung zurückgehalten wird, sobald dieses eine Position in dem Sicherheitsbereich einnimmt.

Ein ähnliches System wird in DE 10 2016 223544 offenbart.

Es ist die Aufgabe der vorliegenden Erfindung, ein verbessertes Konzept zum Sichern eines Insassenraums eines Kraftfahrzeugs anzugeben.

Erfindungsgemäß wird die Aufgabe bei einem Verfahren der eingangs genannten Art dadurch gelöst, dass es die folgenden Schritte umfasst:
a) Ermitteln wenigstens einer Objektpositionsinformation betreffend eine Position und wenigstens einer Objektausdehnungsinformation betreffend eine räumliche Ausdehnung und wenigstens einer Objekteigenschaftsinformation betreffend eine Eigenschaft wenigstens eines sich in dem Insassenraum befindenden Objekts,
b) Ermitteln einer Gefährdungsbereichspositionsinformation betreffend eine Position und einer Gefährdungsbereichsausdehnungsinformation betreffend eine räumliche Ausdehnung eines Gefährdungsbereichs, jeweils in Abhängigkeit der Objekteigenschaftsinformation, wobei der Gefährdungsbereich derjenige Bereich des Insassenraums ist, in dem ein Auslösen eines Airbags des Kraftfahrzeugs eine eine Verletzungsgefahr eines Insassen des Kraftfahrzeugs mit sich bringende Bewegung des Objekts verursacht, sofern sich das Objekt zumindest teilweise in dem Gefährdungsbereich befindet,
c) Überprüfen der Erfüllung einer Gefährdungsbedingung, die erfüllt ist, wenn die Objektpositionsinformation und die Objektausdehnungsinformation und die Gefährdungsbereichspositionsinformation und die Gefährdungsbereichsausdehnungsinformation implizieren, dass sich das Objekt zumindest teilweise in dem Gefährdungsbereich befindet, und
d) Generieren eines eine Maßnahme zur Entfernung des Objekts aus dem Gefährdungsbereich bewirkenden Steuersignals, sofern die Gefährdungsbedingung erfüllt ist.

Die Erfindung beruht insbesondere auf dem Gedanken, dass nicht jedem Gegenstand respektive jedem Objekt dasselbe Gefährdungspotential beim Entfalten des Airbags innewohnt. So hängt der zu bestimmende Gefährdungsbereich, also die Gefährdungsbereichspositionsinformation und die Gefährdungsbereichsausdehnungsinformation, bei der vorliegenden Erfindung von der Objekteigenschaftsinformation ab, die wiederum von dem Gefährdungspotential des Objekts abhängt. Beispielsweise ist das Gefährdungspotential bei einem weichen und/oder leichten Objekt wie etwa einem Plüschtier wesentlich geringer als bei einem harten und/oder schweren Gegenstand wie etwa einem Smartphone oder Laptop. Um dem gerecht zu werden, erfolgt die Ermittlung des Gefährdungsbereichs anhand der Eigenschaft des Objekts. So ist bei einem Objekt mit einem bestimmten niedrigeren Gefährdungspotential der Gefährdungsbereich kleiner dimensioniert als bei einem Objekt mit einem im Vergleich hierzu höheren Gefährdungspotential. Auch die Position des Gefährdungsbereichs kann von dem entsprechenden Gefährdungspotential abhängen. So kann bei einem Objekt mit einem eher niedrigen Gefährdungspotential dieser nur den Kopfbereich des Insassen abdecken, wobei bei einem Objekt mit einem eher hohen Gefährdungspotential zusätzlich der Brustbereich mit erfasst werden kann. Das erfindungsgemäße Verfahren bewirkt insbesondere, dass bei Objekten mit einem vergleichsweise niedrigem Gefährdungspotential ein unnötiges Ergreifen von Maßnahmen zum Entfernen dieses Objekts aus seiner Position vermieden werden kann.

Bezüglich der Objektpositionsinformation kann diese einen Punkt im Insassenraum beschreiben, an dem sich das Objekt befindet, etwa der Mittelpunkt des Objekts. Die Objektausdehnungsinformation betrifft die räumliche Ausdehnung bzw. die Größe des Objekts, also beispielsweise wie weit sich das Objekt maximal von seinem Mittelpunkt aus gesehen erstreckt. Zur Erfassung der Objektpositionsinformation und der Objektausdehnungsinformation werden bevorzugt Daten einer Erfassungseinrichtung des Kraftfahrzeugs verwendet, insbesondere ein Positions- und/oder Bewegungssensor respektive eine Kamera. Details diesbezüglich werden weiter unten erläutert.

Der Gefährdungsbereich kann derjenige Teilbereich des Insassenraums sein, der sich zwischen dem Airbag und dem Insassen befindet. Bezüglich der geometrischen Form des Gefährdungsbereichs kann dieser, von einer Verbauposition des Airbags aus betrachtet, rechteckig oder kreisförmig, also quader-, zylinder- oder kegelförmig sein. Grundsätzlich sind beliebige geometrische Formen des Gefährdungsbereichs denkbar. Die Gefährdungsbereichspositionsinformation kann beispielsweise der Mittelpunkt des Gefährdungsbereichs sein. Die Gefährdungsbereichsausdehnungsinformation betrifft die räumliche Ausdehnung bzw. die Größe des Gefährdungsbereichs.

Zur Ermittlung der Gefährdungsbereichspositionsinformation und/oder der Gefährdungsbereichsausdehnungsinformation können Daten, die seitens eines Datenspeichers einer zur Durchführung des erfindungsgemäßen Verfahrens eingerichteten Steuerungseinrichtung hinterlegt sind, abgerufen werden. Auf einem Datenspeicher kann ein Datensatz hinterlegt sein, bei dem Objekteigenschaftsinformationen Werte betreffend die Gefährdungsbereichspositionsinformation und die Gefährdungsbereichsausdehnungsinformation zugeordnet sind.

Die Gefährdungsbedingung kann erfüllt sein, wenn die jeweiligen Informationen implizieren, dass sich das Objekt vollständig in dem Gefährdungsbereich befindet und/oder wenn das Objekt teilweise in dem Gefährdungsbereich ist, also wenn der vom Objekt eingenommene Teilbereich des Insassenraums und der Gefährdungsbereich eine gemeinsame Schnittmenge aufweisen.

Bezüglich der Maßnahme zur Entfernung des Objekts kann vorgesehen sein, dass diese ein Entfernen des Objekts aus dem Gefährdungsbereich durch den Insassen bewirken soll. Anders ausgedrückt bewirkt die Maßnahme eine Information respektive eine Aufforderung für den Insassen, das Objekt neu zu platzieren. Die Maßnahme kann aber auch bewirken, dass das Objekt ohne einem Zutun des Insassen aus dem Gefährdungsbereich entfernt wird. Konkrete Beispiele diesbezüglich werden unten erläutert.

Die Objekteigenschaftsinformation kann eine Artinformation betreffend eine Art des Objekts sein. **In** diesem Kontext kann vorgesehen sein, dass Sensordaten der Erfassungseinrichtung seitens der Steuerungseinrichtung hinsichtlich der Erfüllung von vorgegebenen Klassifizierungskriterien ausgewertet werden, etwa mittels einer Bilderkennungssoftware. In diesem Zusammenhang ist denkbar, dass das Objekt einer der Objektklassen "Plüschtier", "Buch", "Smartphone", "Laptop" oder dergleichen zugeordnet wird, denen jeweils ein unterschiedliches Gefährdungspotential innewohnt. In Abhängigkeit der ermittelten Artinformation respektive Objektklasse wird dann die Ausdehnung und Lokalisation des Gefährdungsbereichs bestimmt.

Zusätzlich oder alternativ kann die Objekteigenschaftsinformation eine Gewichtsinformation betreffend ein Gewicht und/oder eine Härteinformation betreffend eine Härte und/oder eine Oberflächenbeschaffenheitsinformation betreffend eine Oberflächenbeschaffenheit des Objekts sein. Die Eigenschaft, also das Gewicht und/oder die Härte und/oder die Oberflächenbeschaffenheit des Objekts kann unmittelbar anhand von Sensordaten bestimmt werden. So können anhand der Daten einer weiteren Erfassungseinrichtung des Kraftfahrzeugs, etwa eines Infrarot- und/oder Radarsensors, Rückschlüsse bezüglich des Gewichts des Objekts gezogen werden. Im Zusammenhang mit der Oberflächenbeschaffenheit kann ermittelt werden, etwa anhand der Kameradaten, ob das Objekt scharfe Ecken beziehungsweise Kanten aufweist, so dass der Gefährdungsbereich in diesem Fall entsprechend größer gewählt werden sollte. Die Gewichtsinformation und/oder die Härteinformation und/oder die Oberflächenbeschaffenheitsinformation kann auch mittels der Artinformation und/oder umgekehrt ermittelt werden.

Bei dem erfindungsgemäßen Verfahren kann vorgesehen sein, dass das Steuersignal eine Ausgabe eines optischen Warnsignals und/oder akustischen Warnsignals an einen Insassen bewirkt. Das optische Warnsignal kann über eine Ausgabeeinrichtung des Kraftfahrzeugs, z.B. ein Display ausgegeben werden. Es kann ein einfacher Schriftzug wie etwa "Danger" und/oder ein Text, der den Nutzer explizit zur Entfernung des Objekts auffordert und/oder ein Warnsymbol sein oder umfassen. Bezüglich des akustischen Feedbacks kann mittels einer weiteren Ausgabeeinrichtung wie eines Lautsprechers ein Warnton wie ein Piep-Ton und/oder eine Sprachausgabe ausgegeben werden, etwa "Ihr Handy befindet sich in einem kritischen Bereich. Bitte entfernen Sie es oder legen Sie es auf die Mittelkonsole."

Zusätzlich oder alternativ kann das Steuersignal eine Änderung eines Betriebszustands des als ein mobiles, elektronisches Endgerät vorgesehenen Objekts bewirken. Die Änderung des Betriebszustands des elektronischen Endgeräts, das beispielsweise ein Laptop oder ein Smartphone ist, kann etwa darin bestehen, dass dieses in einen Stand-By-Modus versetzt oder abgeschaltet wird. Auch bei dieser Maßnahme ist von einer entsprechenden Entfernung des Smartphones aus dem Gefährdungsbereich seitens des Nutzers zu rechnen, insbesondere wenn er weiß, dass das Herausbringen des Smartphones aus dem Gefährdungsbereich eine Wiederinbetriebnahme des Smartphones bewirkt respektive ermöglicht.

Besonders bevorzugt kann bei dem erfindungsgemäßen Verfahren vorgesehen sein, dass, insbesondere wenn das oder ein Warnsignal ausgegeben wird, die Gefährdungsbereichspositionsinformation und die Gefährdungsbereichsausdehnungsinformation an den Insassen ausgegeben wird, so dass er konkret über die aktuelle Position und die aktuelle Ausdehnung des Gefährdungsbereichs informiert wird. Durch diese Ausgabe bekommt der Fahrer nicht nur die bloße Information, dass sich das Objekt in dem Gefährdungsbereich befindet, sondern es wird ihm quasi ein Feedback dahingehend gegeben, in welchen Bereich er das Objekt zum Herausführen aus dem Gefährdungsbereich bringen kann. So kann der Insasse etwa bei der Nutzung eines Smartphones dahingehend informiert werden, dass die aktuelle Position des Smartphones, etwa direkt vor seinem Gesicht, im Gefährdungsbereich liegt, wobei dies nicht mehr der Fall ist, wenn er das Smartphone stattdessen weiter nach unten, etwa im Bereich seines Schoßes, halten würde. Der Nutzer kann dann selbst entscheiden, ob er dies tun möchte oder stattdessen das Smartphone lieber ganz aus der Hand legen möchte.

Zusätzlich oder alternativ kann vorgesehen sein, dass, insbesondere wenn das oder ein Warnsignal ausgegeben wird, die Objektpositionsinformation und die Objektausdehnungsinformation an den Insassen ausgegeben wird, so dass er über die Position und die Ausdehnung des Objekts informiert wird. Hierdurch wird dem Insassen eine noch breitere Informationsbasis bezüglich der soeben erläuterten Aspekte geliefert. So wird er hierbei insbesondere dahingehend informiert, ob sich das Objekt am Rand des Gefährdungsbereichs befindet und somit nur noch eine kleine Positionsänderung erforderlich ist, um das Objekt aus dem Gefährdungsbereich zu bringen, oder ob sich das Objekt stattdessen mittig in dem Gefährdungsbereich befindet.

Bei dem erfindungsgemäßen Verfahren kann zusätzlich oder alternativ vorgesehen sein, dass, insbesondere wenn das oder ein Warnsignal ausgegeben wird, eine Sicherheitsbereichspositionsinformation betreffend eine Position und eine Sicherheitsbereichsausdehnungsinformation betreffend eine räumliche Ausdehnung eines vom Gefährdungsbereich abweichenden Sicherheitsbereichs ermittelt und an den Insassen ausgegeben wird, so dass er über die Position und die Ausdehnung des Sicherheitsbereichs informiert wird. Dem Insassen wird also zusätzlich eine Information dahingehend bereitgestellt, wohin er das Objekt konkret bringen kann, so dass es sich nicht mehr im Gefährdungsbereich befindet. Der Sicherheitsbereich kann ein den Gefährdungsbereich umschließender oder an diesem angrenzender Teilbereich des Insassenraums oder ein Bereich auf einer Mittelkonsole des Kraftfahrzeugs oder dergleichen sein.

Grundsätzlich kann auch vorgesehen sein, dass die soeben erläuterte Ausgabe dieser Informationen auch dann erfolgt, sofern der Schritt b) des Verfahrens nicht durchgeführt wurde, insbesondere wenn bei der Durchführung des Verfahrens stets derselbe Sicherheitsbereich zu Grunde liegt.

Bei dem erfindungsgemäßen Verfahren kann vorgesehen sein, dass eine Darstellung, insbesondere ein aktuelles Kamerabild, des Insassenraums zusätzlich zu einer den Gefährdungsbereich anzeigenden Gefährdungsbereichsmarkierung und/oder einer den Sicherheitsbereich anzeigenden Sicherheitsbereichsmarkierung und/oder einer die Position und/oder die Ausdehnung des Objekts anzeigenden Objektbereichsmarkierung erfolgt. Das Kraftfahrzeug kann beispielsweise ein Display aufweisen, mittels dem das Kamerabild zusammen mit den das Kamerabild überlagernden Markierungen dargestellt wird. Die von den Markierungen überlagerten Bereiche des Kamerabildes können durch die Markierung hindurch erkennbar bleiben. Die Markierungen können, beispielsweise in rot, grün und blau, unterschiedlich eingefärbt oder eine Schraffur oder dergleichen sein. Die Informationsausgabe erfolgt hierbei aus der Sicht des Insassen einfach und intuitiv.

Bevorzugt ist vorgesehen, dass eine zeitlich kontinuierliche Ermittlung und eine zeitlich kontinuierliche Ausgabe der Gefährdungsbereichspositionsinformation und/oder der Gefährdungsbereichsausdehnungsinformation und/oder der Objektpositionsinformation und/oder der Objektausdehnungsinformation und/oder der Sicherheitsbereichspositionsinformation und/oder der Sicherheitsbereichsausdehnungsinformation erfolgt. Der Insasse wird also in dieser Ausführungsform quasi in Echtzeit über die aktuelle Lage des Objekts und/oder des Gefährdungsbereichs und/oder des Sicherheitsbereichs informiert. Dies ist etwa dann sinnvoll, wenn der Nutzer die Lage des Objekts ändert und/oder wenn sich der Gefährdungs- und/oder Sicherheitsbereich etwa dadurch ändert, da der Insasse eine andere Sitzhaltung einnimmt.

Bei dem erfindungsgemäßen Verfahren kann vorgesehen sein, dass nach dem Generieren des Steuersignals in Schritt d) und nach dem Ablauf einer sich hieran anschließenden und vorgegebenen Zeitspanne die Schritte a) bis c) erneut durchlaufen werden, wobei bei einer erneuten Erfüllung der Gefährdungsbedingung ein erneutes Generieren des Steuersignals oder ein Generieren eines eine weitere Maßnahme zur Entfernung des Gegenstandes aus dem Gefährdungsbereich bewirkenden Eskalationssteuersignals erfolgt. Hierdurch wird sichergestellt, dass der Insasse auf die Aufforderung, das Objekt aus dem Sicherheitsbereich zu entfernen, letztlich auch reagiert. Zudem wird dem Insassen ein Feedback dahingehend geliefert, ob eine etwaige bereits durchgeführte Positionsänderung des Objekts bereits ausreichend war, um dieses aus dem Sicherheitsbereich zu entfernen. Die Zeitspanne kann ein vorgegebenes Zeitintervall sein, beispielsweise zwischen drei Sekunden und einer Minute, insbesondere zehn Sekunden.

Bezüglich des Eskalationssteuersignals kann vorgesehen sein, dass dieses eine drastischere Maßnahme zur Entfernung des Objekts aus dem Gefährdungsbereich bewirkt als das bereits generierte Steuersignal. So kann beispielsweise bei der erstmaligen Erfüllung der Gefährdungsbedingung und der Generierung des Steuersignals lediglich die Ausgabe des Warnsignals bewirkt werden, wobei das Eskalationssteuersignal das Ausschalten des Smartphones und/oder eine Verlangsamung des Fahrzeugs bewirkt.

Die vorliegende Erfindung betrifft ferner eine Steuerungseinrichtung für ein Kraftfahrzeug, wobei die Steuerungseinrichtung zur Durchführung des Verfahrens gemäß der obigen Beschreibung eingerichtet ist. Sämtliche im Zusammenhang mit dem erfindungsgemäßen Verfahren erläuterten Aspekte, Merkmale und Vorteile gelten gleichermaßen für die erfindungsgemäße Steuerungseinrichtung und umgekehrt.

Die vorliegende Erfindung betrifft ferner ein Kraftfahrzeug mit einem Insassenraum, umfassend die soeben genannte Steuerungseinrichtung und eine Erfassungseinrichtung zum Ermitteln der Objektpositionsinformation und der Objektausdehnungsinformation und der Objekteigenschaftsinformation. Sämtliche Aspekte, Merkmale und Vorteile, die im Zusammenhang mit dem erfindungsgemäßen Verfahren und der erfindungsgemäßen Steuerungseinrichtung beschrieben sind, gelten gleichermaßen für das erfindungsgemäße Kraftfahrzeug und umgekehrt.

Bezüglich der Erfassungseinrichtung kann vorgesehen sein, dass diese ein Positions- und/oder Bewegungssensor, insbesondere eine Kamera, ist oder einen solchen umfasst. So können die mittels der Kamera erfassten Bilddaten an die Steuerungseinrichtung übergeben werden, die diese, beispielsweise mittels einer entsprechenden Bilderkennungssoftware, analysieren und die Informationen ermitteln kann. Insbesondere wenn die Ermittlung der entsprechenden Informationen basierend auf drei Dimensionen erfolgen soll, können mehrere, insbesondere zwei oder drei, Kameras im Insassenraum des Kraftfahrzeugs vorgesehen sein, wobei seitens der Steuerungseinrichtung eine gemeinsame Auswertung dieser Bilddaten erfolgt.

Bei dem erfindungsgemäßen Kraftfahrzeug kann vorgesehen sein, dass es wenigstens eine Ausgabeeinrichtung, insbesondere ein Display und/oder einen Lautsprecher, zur Ausgabe des oder eines Warnsignals umfasst. Das Display kann im Bereich eines Armaturenbretts des Kraftfahrzeugs angeordnet sein, so dass es von den Insassen problemlos eingesehen werden kann.

Weitere Aspekte, Merkmale und Vorteile der Erfindung werden anhand der Ausführungsbeispiele sowie der Figuren erläutert. Es zeigen schematisch:
- Fig. 1: ein Ausführungsbeispiel eines erfindungsgemäßen Kraftfahrzeugs,
- Fig. 2: ein Flussdiagramm eines Ausführungsbeispiels eines erfindungsgemäßen Verfahrens, das anhand des Kraftfahrzeugs der Fig. 1 erläutert wird, und
- Fig. 3: eine Anzeige eines Displays des Kraftfahrzeugs aus Fig. 1.

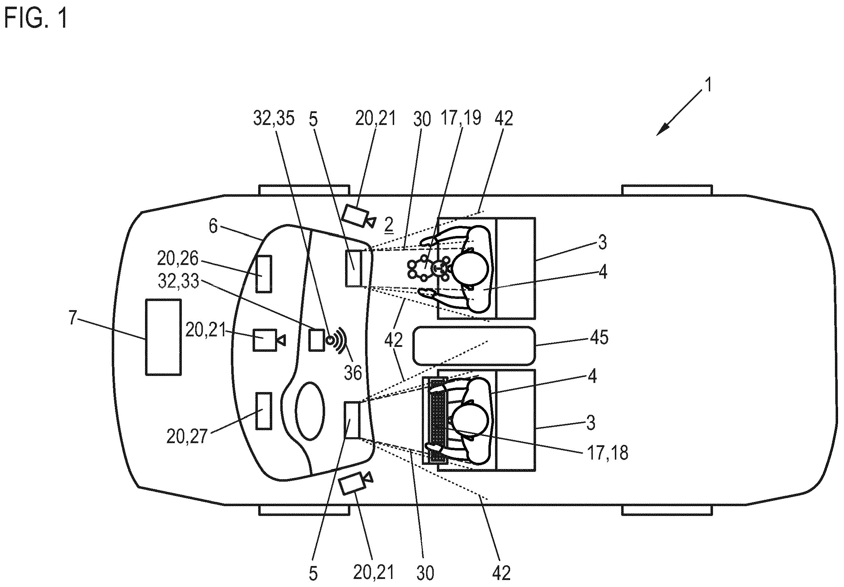

Fig. 1 zeigt ein erfindungsgemäßes Kraftfahrzeug 1 mit einem Insassenraum 2 und darin angeordneten Sitzen 3, nämlich einen Fahrer- und einen Beifahrersitz, auf denen jeweils ein Insasse 4 sitzt. Weiterhin umfasst das Kraftfahrzeug 1 zwei Airbags 5, die im Bereich eines Armaturenbretts 6 des Kraftfahrzeugs 1 angeordnet sind und jeweils dem Schutz des auf einem der Fahrzeugsitze 3 sitzenden Insassen 4 bei einen Unfall dienen.

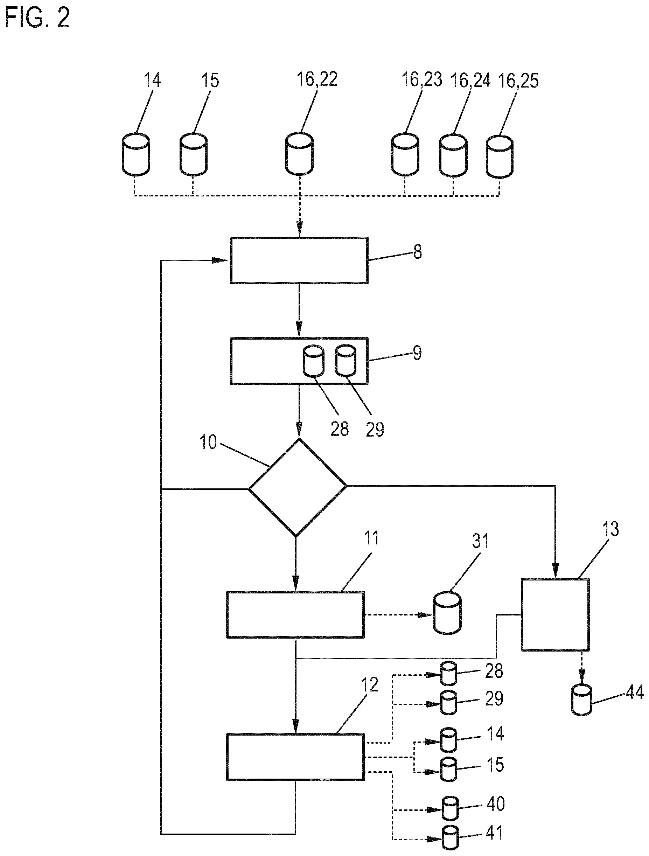

Nachfolgend wird anhand der Fig. 2 ein Ausführungsbeispiel des erfindungsgemäßen Verfahrens, bezogen auf das in Fig. 1 gezeigte Kraftfahrzeug 1, erläutert. Zur Durchführung dieses Verfahrens ist eine Steuerungseinrichtung 7 des Kraftfahrzeugs eingerichtet, das mit den entsprechend beteiligten Komponenten verbunden ist. Der Übersichtlichkeit halber sind diese Verbindungen in Fig. 1 nicht gezeigt. Das Verfahren umfasst die Schritte 8 bis 13.

Im ersten Schritt 8 wird eine Objektpositionsinformation 14 betreffend eine Position und eine Objektausdehnungsinformation 15 betreffend eine räumliche Ausdehnung und eine Objekteigenschaftsinformation 16 betreffend eine Eigenschaft mehrerer sich in den Insassenraum 2 befindender Objekte 17 ermittelt. Exemplarisch sind die Objekte 17 ein Laptop 18 sowie ein Plüschtier 19 bzw. ein Teddy, die sich jeweils auf einem Schoß eines der Insassen 4 befinden.

Zur Erfassung der Informationen 14, 15, 16 sind mehrere Erfassungseinrichtungen 20 des Kraftfahrzeugs 1 vorgesehen. So sind als Erfassungseinrichtungen 20 beispielhaft drei im Insassenraum 2 verteilt angeordnete Kameras 21 vorgesehen, die jeweils ein Bild des Insassenraums 2 aus unterschiedlichen Blickwinkel erfassen, das an die Steuerungseinrichtung 7 übertragen wird. Die Steuerungseinrichtung 7 ist dazu eingerichtet, anhand der Bilddaten und mittels einer geeigneten Bildauswertesoftware die Objektpositionsinformation 14 zu ermitteln. Diese betrifft jeweils den Mittelpunkt der Objekte 17, beschrieben in drei Dimensionen. Außerdem erfolgt mittels der Steuerungseinrichtung 7 die Ermittlung der Objektausdehnungsinformation 15, die die Größe des jeweiligen Objekts 17 betrifft.

Bezüglich der Eigenschaften der Objekte 17 werden mehrere Objekteigenschaftsinformationen 16 ermittelt. Eine der Objekteigenschaftsinformationen 16 ist eine Artinformation betreffend die Art des Objekts 17. Die Artinformation 22 wird insbesondere anhand der mittels der Kameras 21 erfassten Kameradaten im Rahmen der Bildauswertungssoftware erfasst. Vorliegend wird zu den Objekten 17 jeweils die Artinformation 22 "Laptop" und "Plüschtier" ermittelt. Dies erfolgt anhand eines vorgegebenen Klassifikationskatalogs, der seitens der Steuerungseinrichtung 7 hinterlegt ist.

Als Objektseigenschaftsinformation 16 wird ferner eine Gewichtsinformation 23, eine Härteninformation 24 sowie eine Oberflächenbeschaffenheitsinformation 25 des Objekts 17 ermittelt. Insbesondere bezüglich der Oberflächenbeschaffenheitsinformation 25 ist denkbar, dass diese ebenfalls im Rahmen der bereits erwähnten Bildauswertung ermittelt wird. Zur Bestimmung der Gewichtsinformation 23 können Daten weiterer Erfassungseinrichtungen 20, nämlich eines Infrarotsensors 26 und eines Radarsensors 27 des Kraftfahrzeugs 1, genutzt werden. Die Ermittlung der Gewichtsinformation 23, der Härteinformation 24 und der Oberflächenbeschaffenheitsinformation 25 kann anhand der ermittelten Artinformation 22 und/oder umgekehrt erfolgen, insbesondere auch zu Verifizierungszwecken. So kann etwa anhand der Artinformation 22 "Plüschtier" die hinterlegte Härteinformation 24 zugeordnet werden, dass dieses Objekt 17 weich ist.

Im zweiten Schritt 9 des Verfahrens wird eine Gefährdungsbereichspositionsinformation 28 betreffend eine Position und eine Gefährdungsbereichsausdehnungsinformation 29 betreffend eine räumliche Ausdehnung eines Gefährdungsbereichs 30 ermittelt. Konkret erfolgt für jedes der Objekte 17 eine separate Ermittlung eines jeweils zugehörigen Gefährdungsbereichs 30, die in der Fig. 1 jeweils zwischen den gestrichelten Linien angeordnet sind. Der Gefährdungsbereich 30 ist derjenige Bereich des Insassenraums 2, in dem ein Auslösen des Airbags 5 eine Bewegung des zugeordneten Objekts 17 verursachen würde, die eine Verletzungsgefahr für die Insassen 4 birgt respektive mit sich bringt, sofern sich das jeweilige Objekt 17 zumindest teilweise im Gefährdungsbereich 30 befindet. Vorliegend ist der Gefährdungsbereich 30 der Abschnitt des Innenraums 2 zwischen dem Airbag 5 und dem Passagier 4.

Die Ermittlung der Gefährdungsbereichspositionsinformation 28, also des Mittelpunkts des Gefährdungsbereichs 30, sowie der Gefährdungsbereichsausdehnungsinformation 29, also der Größe des Gefährdungsbereichs 30, erfolgt anhand der Objekteigenschaftsinformation 16. Für den Laptop 18 ist der Gefährdungsbereich 30 der komplette Bereich vor dem Kopf und dem Oberkörper des fahrerseitigen Insassen 4. So impliziert die Objekteigenschaftsinformation 16 bezüglich des Laptops 18, dass dieses Objekt 17 bezüglich Größe, Härte und Gewicht derart beschaffen ist, dass der Gefährdungsbereich 16 bezüglich des Laptops 18 entsprechend groß zu wählen ist.

Bezüglich des Plüschtiers 19 ist der Gefährdungsbereich 30 lediglich der Bereich zwischen dem Airbag 5 und dem Kopf des beifahrerseitigen Insassen 4. Der dem Plüschtier 19 zugeordnete Gefährdungsbereich 30 ist deshalb im Vergleich zu dem dem Laptop 18 zugeordneten Gefährdungsbereich 30 kleiner und weiter oben positioniert, da das auf dem Schoß des beifahrerseitigen Insassen 4 sitzende Plüschtier 19 bei der Entfaltung des Airbags 5 kein oder ein nur sehr geringes Gefährdungspotential birgt. Die Objekteigenschaftsinformationen 16 implizieren hierbei, dass das Plüschtier 19 ein geringes Gewicht und eine sehr weiche Härte aufweist, so dass der zugehörige Gefährdungsbereich 30 entsprechend klein gewählt werden kann.

Im nächsten Schritt 10 des Verfahrens wird überprüft, ob eine Gefährdungsbedingung erfüllt ist. Dies ist der Fall, sofern die Informationen 14 bis 16 und 28 und 29 implizieren, dass sich das Objekt 17 zumindest teilweise in dem jeweiligen Gefährdungsbereich 30 befindet. Wenn dies nicht der Fall ist, dann ist keine Maßnahme diesbezüglich erforderlich, da sich der Airbag 5 bezüglich des Objekts 7 ungehindert entfalten kann. Das Verfahren wird in diesem Fall wieder im ersten Schritt 8 gestartet.

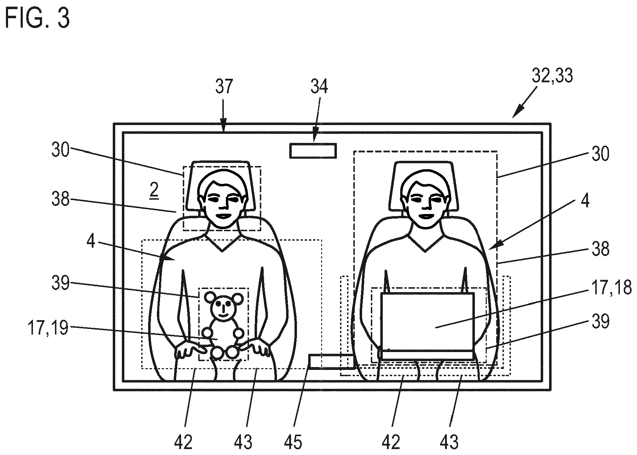

Sofern die Gefährdungsbedingung erfüllt ist, wird das Verfahren im nächsten Schritt 11 fortgesetzt, bei dem ein Steuersignal 31 generiert und ausgegeben wird, das eine Maßnahme zur Entfernung des Objekts 17 aus dem Gefährdungsbereich 30 bewirkt. Konkret bewirkt das Steuersignal 17 eine Ausgabe eines optischen Warnsignals 34 und eines akustischen Warnsignals 36 an die Insassen 4 mittels Ausgabeeinrichtungen 32 des Kraftfahrzeugs 1. Als Ausgabeeinrichtung 32 ist ein Display 33 vorgesehen, mittels dem das optische Warnsignal 34 z.B. in Form des Schriftzuges "DANGER" ausgegeben wird. Die Displayausgabe ist in Fig. 3 gezeigt und wird später noch näher erläutert. Als Ausgabeeinrichtung 32 ist ein Lautsprecher 35 vorgesehen, mittels dem das akustische Warnsignal 36 ausgegeben wird. Das akustische Warnsignal 36 ist ein Piep-Ton und/oder eine Sprachausgabe, die die Insassen 4 zur Entfernung des betroffenen Objekts 17 aus dem Gefährdungsbereich 30 auffordert.

Anschließend oder parallel zum Schritt 11 wird der Schritt 12 durchgeführt, in dem weitere Informationen betreffend die aktuellen Positionen der Objekte 17 sowie der Gefährdungsbereiche 30 an die Insassen 4 ausgegeben werden. Konkret ist vorgesehen, dass den Insassen 4 über das Display 33 die Gefährdungsbereichspositionsinformation 28 sowie die Gefährdungsbereichsausdehnungsinformation 29 mitgeteilt wird. Dies erfolgt durch die Ausgabe eines aktuellen und mittels der mittig am Armaturenbrett 6 angeordneten Kamera 21 erfassten Kamerabilds 37 des Insassenraums 2 über das Display 33 (siehe Figur 3). Auf dem Kamerabild 37 sind vorliegend insbesondere die beiden Insassen 4 sowie die Objekte 17 erkennbar.

Die Ausgabe der Gefährdungsbereichspositionsinformation 28 und die Gefährdungsbereichsausdehnungsinformation 29 erfolgt dadurch, dass dem Kamerabild eine die Gefährdungsbereiche 30 anzeigende Gefährdungsbereichsmarkierung 38 überlagert wird. **In** Fig. 3 ist die Gefährdungsbereichsmarkierung 38 jeweils durch einen gestrichelten Kasten dargestellt, die auf dem Display 33 konkret als ein rot eingefärbter Bereich dargestellt werden, durch den das Kamerabild 37 hindurchscheint.

Zusätzlich wird mittels des Displays 33 die Objektpositionsinformation 14 sowie die Objektausdehnungsinformation 15 ausgegeben, so dass die Insassen 4 über die Position und die Ausdehnung des Objekts 17 informiert werden. Analog zur Ausgabe der Gefährdungsbereichsmarkierung 38 wird die Objektbereichsmarkierung 39 als blaues Rechteck ausgegeben, das in der Figur 3 als strichpunktierte Linie dargestellt ist.

Ferner wird mittels der Steuerungseinrichtung 7 eine Sicherheitsbereichspositionsinformation 40 betreffend eine Position und eine Sicherheitsbereichsausdehnungsinformation 41 betreffend eine räumliche Ausdehnung eines von dem Gefährdungsbereich 30 abweichenden Sicherheitsbereichs 42 ermittelt und mittels des Displays 33 ausgegeben. Die Insassen 4 werden so über die Position und die Ausdehnung des Sicherheitsbereichs 42 informiert und bekommen dadurch einen konkreten Vorschlag, in welchen Bereich das jeweilige Objekt 17 gebracht werden könnte, so dass es nicht mehr innerhalb des Gefahrenbereichs 30 ist. Analog zur Darstellung der Gefährdungsbereichsmarkierung 38 und der Objektbereichsmarkierung 39 wird ferner mittels des Displays 33 eine entsprechende Sicherheitsbereichsmarkierung 43 in grüner Farbe, die den Sicherheitsbereich 42 anzeigt, ausgegeben. In den Figuren 1 und 3 ist der Sicherheitsbereich 42 jeweils durch gepunktete Linien angedeutet. Durch die Anzeige des Sicherheitsbereichs 42 bekommen die Insassen 4 letztlich konkret quasi einen Vorschlag, wohin das Objekt 17 gebracht werden könnte, vorliegend etwa auf eine Mittelkonsole 45 des Kraftfahrzeugs. Bezüglich der Ausgabe der Bereichsmarkierungen 38, 39, 43 ist es grundsätzlich denkbar, dass diese auch bei einem fest vorgegebenen Gefährdungsbereich 30 und insbesondere Sicherheitsbereich 42 erfolgt.

Im Schritt 12 des Verfahrens erfolgt zudem eine zeitlich kontinuierliche Ermittlung der Informationen 14, 15, 16, 28, 29, 40, 41 sowie Erfassung des Kamerabildes 37, so dass die mittels des Displays 33 ausgegebenen Markierungsbereiche 38, 39, 43 ebenfalls laufend aktualisiert ausgegeben werden.

Nachdem der Schritt 12 eine gewisse Zeitdauer, exemplarisch zehn Sekunden, lang durchlaufen wurde, werden die Schritte 8, 9 und 10 des Verfahrens erneut durchlaufen. Sofern die Überprüfung der Gefährdungsbedingung im Schritt 10 eine erneute Erfüllung der Gefährdungsbedingung ergibt, dann wird das Verfahren in Schritt 13 fortgesetzt. Im Schritt 13 ist vorgesehen, dass ein Eskalationssteuersignal 44 generiert wird, das eine weitere Maßnahme zur Entfernung des Gegenstands 17 aus dem Gefährdungsbereich 30 bewirkt. Das Eskalationssteuersignal 44 bewirkt eine im Vergleich zum Steuersignal 31 drastischere Maßnahmen zum Entfernen des Objekts 17 aus dem Gefährdungsbereich 30, da der Insasse 4 auf die erstmalige Maßnahme das Objekt 17 offenbar nicht reagiert hat und sich das Objekt 17 immer noch im Gefährdungsbereich 30 befindet. Die im Zusammenhang mit dem Eskalationssteuersignal 44 genannten Maßnahmen können gleichermaßen bereits durch das Steuersignal 31 bewirkt werden oder umgekehrt.

Sofern das Objekt 17 ein elektronisches Endgerät wie etwa ein Smartphone oder das Laptop 18 ist, bewirkt das Eskalationssteuersignal 44 eine Änderung des Betriebszustands dieses Objekts 17. Konkret wird ein Ausschalten des elektronischen Endgeräts bewirkt.

Das Eskalationssteuersignal 44 kann zusätzlich oder alternativ ein Abbremsen des Kraftfahrzeugs 1 bewirken, so dass der Insasse 4 auf sein "Fehlverhalten" aufmerksam gemacht wird.

## Patentansprüche

1. Verfahren zum Sichern eines Insassenraums (2) eines Kraftfahrzeugs (1), umfassend die folgenden Schritte:
a) Ermitteln wenigstens einer Objektpositionsinformation (14) betreffend eine Position und wenigstens einer Objektausdehnungsinformation (15) betreffend eine räumliche Ausdehnung und wenigstens einer Objekteigenschaftsinformation (16) betreffend eine Eigenschaft wenigstens eines sich in dem Insassenraum (2) befindenden Objekts (17),
b) Ermitteln einer Gefährdungsbereichspositionsinformation (28) betreffend eine Position und einer Gefährdungsbereichsausdehnungsinformation (29) betreffend eine räumliche Ausdehnung eines Gefährdungsbereichs (30), jeweils in Abhängigkeit der Objekteigenschaftsinformation (16), wobei der Gefährdungsbereich (30) derjenige Bereich des Insassenraums (2) ist, in dem ein Auslösen eines Airbags (5) des Kraftfahrzeugs (1) eine eine Verletzungsgefahr eines Insassen (4) des Kraftfahrzeugs (1) mit sich bringende Bewegung des Objekts (17) verursacht, sofern sich das Objekt (17) zumindest teilweise in dem Gefährdungsbereich (30) befindet,
c) Überprüfen der Erfüllung einer Gefährdungsbedingung, die erfüllt ist, wenn die Objektpositionsinformation (14) und die Objektausdehnungsinformation (15) und die Gefährdungsbereichspositionsinformation (28) und die Gefährdungsbereichsausdehnungsinformation (29) implizieren, dass sich das Objekt (17) zumindest teilweise in dem Gefährdungsbereich (30) befindet, und
d) Generieren eines eine Maßnahme zur Entfernung des Objekts (17) aus dem Gefährdungsbereich (30) bewirkenden Steuersignals (31), sofern die Gefährdungsbedingung erfüllt ist.

2. Verfahren nach Anspruch 1,
**dadurch gekennzeichnet,**
**dass** die Objekteigenschaftsinformation (16) eine Artinformation (22) betreffend eine Art, insbesondere gemäß einer vorgegebenen Gegenstandsklassifikation, und/oder eine Gewichtsinformation (23) betreffend ein Gewicht und/oder eine Härteinformation (24) betreffend eine Härte und/oder eine Oberflächenbeschaffenheitsinformation (25) betreffend eine Oberflächenbeschaffenheit des Objekts (17) ist.

3. Verfahren nach Anspruch 1 oder 2,
**dadurch gekennzeichnet,**
**dass** das Steuersignal (31) eine Ausgabe eines optischen Warnsignals (34) und/oder akustischen Warnsignals (34) an den Insassen (4) und/oder eine Änderung eines Betriebszustandes des als ein mobiles, elektronisches Endgerät vorgesehenen Objekts (17) und/oder ein automatisches Herausbewegen des Objekts (17) aus dem Gefährdungsbereich (30) bewirkt.

4. Verfahren nach einem der vorangehenden Ansprüche,
**dadurch gekennzeichnet,**
**dass**, insbesondere wenn das oder ein Warnsignal ausgegeben wird,
- die Gefährdungsbereichspositionsinformation und die Gefährdungsbereichsausdehnungsinformation an den Insassen ausgegeben wird, so dass er über die Position und die Ausdehnung des Gefährdungsbereichs informiert wird, und/oder
- die Objektpositionsinformation und die Objektausdehnungsinformation an den Insassen ausgegeben wird, so dass er über die Position und die Ausdehnung des Objekts informiert wird, und/oder
- eine Sicherheitsbereichspositionsinformation betreffend eine Position und einer Sicherheitsbereichsausdehnungsinformation betreffend eine räumliche Ausdehnung eines vom Gefährdungsbereich abweichenden Sicherheitsbereichs ermittelt und an den Insassen ausgegeben wird, so dass er über die Position und die Ausdehnung des Sicherheitsbereichs informiert wird.

5. Verfahren nach Anspruch 4,
**dadurch gekennzeichnet,**
**dass** eine Darstellung, insbesondere ein aktuelles Kamerabild, des Insassenraums zusätzlich zu einer den Gefährdungsbereich anzeigenden Gefährdungsbereichsmarkierung und/oder einer den Sicherheitsbereich anzeigenden Sicherheitsbereichsmarkierung und/oder einer die Position und/oder die Ausdehnung des Objekts anzeigenden Objektbereichsmarkierung erfolgt.

6. Verfahren nach Anspruch 4 oder 5,
**dadurch gekennzeichnet,**
**dass** eine zeitlich kontinuierliche Ermittlung und eine zeitlich kontinuierliche Ausgabe der Gefährdungsbereichspositionsinformation und/oder der Gefährdungsbereichsausdehnungsinformation und/oder der Objektpositionsinformation und/oder der Objektausdehnungsinformation und/oder der Sicherheitsbereichspositionsinformation und/oder der Sicherheitsbereichsausdehnungsinformation erfolgt.

7. Verfahren nach einem der vorangehenden Ansprüche,
**dadurch gekennzeichnet,**
**dass** nach dem Generieren des Steuersignals (31) im Schritt d) und nach dem Ablauf einer sich hieran anschließenden und vorgegebenen Zeitspanne die Schritte a) bis c) erneut durchlaufen werden, wobei bei einer erneuten Erfüllung der Gefährdungsbedingung ein erneutes Generieren des Steuersignals (31) oder ein Generieren eines eine weitere Maßnahme zur Entfernung des Gegenstandes (17) aus dem Gefährdungsbereich (30) bewirkenden Eskalations-Steuersignals (44) erfolgt.

8. Steuerungseinrichtung für ein Kraftfahrzeug, wobei die Steuerungseinrichtung (7) zur Durchführung des Verfahrens nach einem der vorangehenden Ansprüche eingerichtet ist.

9. Kraftfahrzeug mit einem Insassenraum (2), umfassend die Steuerungseinrichtung (7) nach Anspruch 8 und eine Erfassungseinrichtung (20) zum Ermitteln der Objektpositionsinformation (14) und der Objektausdehnungsinformation (15) und der Objekteigenschaftsinformation (16).

10. Kraftfahrzeug nach Anspruch 9,
**dadurch gekennzeichnet,**
**dass** die Erfassungseinrichtung (20) ein Positions- und/oder Bewegungssensor, insbesondere eine Kamera (21), ist oder einen solchen umfasst.

11. Kraftfahrzeug nach Anspruch 9 oder 10,
**dadurch gekennzeichnet,**
**dass** es wenigstens eine Ausgabeeinrichtung (32), insbesondere ein Display (33) und/oder einen Lautsprecher (35), zur Ausgabe des oder eines Warnsignals (34; 36) umfasst.

## Claims

1. Method for securing a passenger compartment (2) of a motor vehicle (1), comprising the following steps:
a) determining at least one object position information (14) relating to a position and at least one object extension information (15) relating to a spatial extension and at least one object property information (16) relating to a property of at least one object (17) located in the passenger compartment (2),
b) determining hazard area position information (28) relating to a position and hazard area extension information (29) relating to a spatial extension of a hazard area (30), in each case as a function of the object property information (16), wherein the hazard area (30) is that area of the passenger compartment (2) in which a deployment of an airbag (5) of the motor vehicle (1) causes a movement of the object (17) that entails a risk of injury to an occupant (4) of the motor vehicle (1), provided that the object (17) is at least partially located in the hazard area (30),
c) checking whether a hazard condition has been met, which is met if the object position information (14) and the object extension information (15) and the hazard area position information (28) and the hazard area extension information (29) imply that the object (17) is located at least partially in the hazard area (30), and
d) generating a control signal (31) that causes a measure to be taken to remove the object (17) from the hazard area (30), provided that the hazard condition is met.

2. Method according to claim 1,
**characterized in that**
the object property information (16) is type information (22) relating to a type, in particular according to a predetermined object classification, and/or weight information (23) concerning a weight and/or hardness information (24) concerning a hardness and/or surface quality information (25) concerning a surface quality of the object (17).

3. Method according to claim 1 or 2,
**characterized in that**
the control signal (31) triggers an output of a visual warning signal (34) and/or an audible warning signal (34) to the occupant (4) and/or a change in an operating state of the object (17) provided as a mobile electronic terminal device and/or an automatic movement of the object (17) out of the hazard area (30).

4. Method according to any one of the preceding claims,
**characterized in that**,
in particular when the warning signal or a warning signal is output,
- the hazard area position information and the hazard area extension information are output to the occupant so that they are informed about the position and extension of the hazard area, and/or
- the object position information and the object extension information are output to the occupant so that they are informed about the position and extension of the object, and/or
- safety area position information concerning a position and safety area extension information concerning a spatial extension of a safety area deviating from the hazard area is determined and output to the occupant so that they are informed about the position and extension of the safety area.

5. Method according to claim 4,
**characterized in that**
a representation, in particular a current camera image, of the passenger compartment is provided, in addition to a hazard area marking indicating the hazard area and/or a safety area marking indicating the safety area and/or an object area marking indicating the position and/or extension of the object.

6. Method according to claim 4 or 5,
**characterized in that**
the hazard area position information and/or the hazard area extension information and/or the object position information and/or the object extension information and/or the safety area position information and/or the safety area extension information is determined and output continuously over time.

7. Method according to any one of the preceding claims,
**characterized in that**
after the control signal (31) has been generated in step d) and after a predetermined period of time has elapsed, steps a) to c) are repeated, wherein if the hazard condition is met again, the control signal (31) is generated again or an escalation control signal (44) is generated which causes a further measure to be taken to remove the object (17) from the hazard area (30).

8. Control apparatus for a motor vehicle, wherein the control apparatus (7) is arranged to perform the method according to any one of the preceding claims.

9. Motor vehicle with a passenger compartment (2), comprising the control apparatus (7) according to claim 8 and a detection apparatus (20) for determining the object position information (14) and the object extension information (15) and the object property information (16).

10. Motor vehicle according to claim 9,
**characterized in that**
the detection apparatus (20) is or comprises a position and/or motion sensor, in particular a camera (21).

11. Motor vehicle according to claim 9 or 10,
**characterized in that**
it comprises at least one output apparatus (32), in particular a display (33) and/or a loudspeaker (35), for outputting the or a warning signal (34; 36).

## Revendications

1. Procédé de protection d'un habitacle (2) d'un véhicule à moteur (1), comprenant les étapes suivantes :
a) la détermination d'au moins une information de position d'objet (14) concernant une position et au moins une information d'étendue d'objet (15) concernant une étendue spatiale et au moins une information de propriété d'objet (16) concernant une propriété au moins d'un objet (17) se trouvant dans l'habitacle (2),
b) la détermination d'une information de position de zone dangereuse (28) concernant une position et une information d'étendue de zone dangereuse (29) concernant une étendue spatiale d'une zone dangereuse (30), respectivement en fonction de l'information de propriété d'objet (16), dans lequel la zone dangereuse (30) est la zone de l'habitacle (2) dans laquelle un déclenchement d'un airbag (5) du véhicule à moteur (1) cause un mouvement de l'objet (17) entraînant avec lui un risque de blessure d'un occupant (4) du véhicule à moteur (1) dans la mesure où l'objet (17) se trouve au moins partiellement dans la zone dangereuse (30),
c) la vérification de la satisfaction à une condition dangereuse qui est remplie lorsque l'information de position d'objet (14) et l'information d'étendue de l'objet (15) et l'information de position de zone dangereuse (28) et les informations d'étendue de zone de risque (29) impliquent que l'objet (17) se trouvent au moins partiellement dans la zone dangereuse (30), et
d) la génération d'un signal de commande (31) provoquant une mesure d'éloignement de l'objet (17) de la zone dangereuse (30) dans la mesure à la condition dangereuse est remplie.

2. Procédé selon la revendication 1,
**caractérisé en ce que**
les informations de propriété d'objet (16) sont une information de type (22) concernant un type, en particulier selon une classification d'objet prédéfinie, et/ou une information de poids (23) concernant un poids et/ou une information de dureté (24) concernant une dureté et/ou une information de nature de surface (25) concernant une nature de surface de l'objet (17).

3. Procédé selon la revendication 1 ou 2,
**caractérisé en ce que**
le signal de commande (31) provoque une transmission d'un signal d'avertissement (34) optique et/ou signal d'avertissement (34) acoustique à l'occupant (4) et/ou une modification d'un état de fonctionnement de l'objet (17) prévu comme un terminal électronique mobile et/ou un déplacement automatique de l'objet (17) hors de la zone dangereuse (30).

4. Procédé selon l'une quelconque des revendications précédentes,
**caractérisé en ce que**
en particulier lorsque le ou un signal d'avertissement est émis,
- les informations de position de zone dangereuse et les informations d'étendue de zone dangereuse sont transmises à l'occupant de sorte qu'il soit informé de la position et de l'étendue de la zone dangereuse et/ou
- les informations de position d'objet et les informations d'étendue d'objet sont transmises à l'occupant de sorte qu'il soit informé de la position et de l'étendue de l'objet et/ou
- une information de position de zone de sécurité concernant une position et une information d'étendue de zone de sécurité concernant une étendue spatiale d'une zone de sécurité divergeant de la zone dangereuse est déterminée et transmise à l'occupant de sorte qu'il soit informé de la position et de l'étendue de la zone de sécurité.

5. Procédé selon la revendication 4,
**caractérisé en ce que**
une représentation, en particulier une image de caméra actuelle de l'habitacle est effectuée outre un marquage de zone dangereuse indiquant la zone dangereuse et/ou un marquage de zone de sécurité indiquant la zone de sécurité et/ou un marquage de zone d'objet indiquant la position et/ou l'étendue de l'objet.

6. Procédé selon la revendication 4 ou 5,
**caractérisé en ce que**
une détermination continue temporellement et une émission continue temporellement des informations de position de zone dangereuse et/ou des informations d'étendue de zone dangereuse et/ou des informations de position d'objet et/ou des informations d'étendue d'objet et/ou des informations de position de zone de sécurité et/ou des informations d'étendue de zone de sécurité est effectuée.

7. Procédé selon l'une quelconque des revendications précédentes,
**caractérisé en ce que**
après la génération du signal de commande (31) à l'étape d) et après l'expiration d'un intervalle prédéfini et contigu à, les étapes a à c) sont de nouveau parcourues, dans lequel lors d'une nouvelle satisfaction de la condition dangereuse une nouvelle génération du signal de commande (31) ou une génération d'un signal de commande d'escalade (44) provoquant une autre mesure pour l'éloignement de l'objet (17) de la zone dangereuse (30) est effectuée.

8. Dispositif de commande pour un véhicule à moteur, dans lequel le dispositif de commande (7) est conçu pour l'exécution du procédé selon l'une quelconque des revendications précédentes.

9. Véhicule à moteur avec un habitacle (2) comprenant le dispositif de commande (7) selon la revendication 8 et un dispositif de détection (20) pour la détermination des informations de position d'objet (14) et des informations d'étendue d'objet (15) et des informations de propriétés d'objet (16).

10. Véhicule à moteur selon la revendication 9,
**caractérisé en ce que**
le dispositif de détection (20) est un capteur de position et/ou capteur de déplacement, en particulier une caméra (21) ou comprend un tel.

11. Véhicule à moteur selon la revendication 9 ou 10,
**caractérisé en ce que**
il comprend au moins un dispositif de sortie (32), en particulier un écran (33) et/ou un haut-parleur (35) pour l'émission du ou d'un signal d'avertissement (34 ; 36).
